# EUROPEAN PATENT APPLICATION

(11) **EP 1 279 436 A2**
(43) Date of publication of application: **29.01.2003**
(21) Application number: 02014385.5
(22) Date of filing: 28.06.2002
(51) Int. Cl.: B01L 3/00

(54) **Handling and delivering fluid through a microchannel in an elastic substrate by progressively squeezing the microchannel along its length**

(30) Priority: 24.07.2001 KR 2001044513
(71) Applicant: LG ELECTRONICS INC., Seoul (KR); Pohang University of Science and Technology, Pohang, Kyongsangbuk-do (KR)
(72) Inventor: Hahn, Jong, Hoon, Hyoja-Dong,Nam-Ku, Pohang,Kyungsanbuk-Do (KR); Lim, Kwanseop, Pohang, Gyeongsangbuk-Do (KR); Na, Kihoon, Pyeongtaek, Gyeonggi-Do (KR); Kim, Suhyeon, Seocho-Ku, Seoul (KR); Park, Je-Kyun, Gangnam-Ku, Seoul (KR)
(74) Representative: Vetter, Ewald Otto

(57) **Abstract**

Minute or infinitesimal amounts of fluid can be accurately delivered through microchannels formed in an elastic polymeric substrate. External (mechanical) force is applied on the substrate to progressively squeeze the microchannel along its length to push or pull the fluid through the microchannel. Fluids can be delivered at a constant rate and amount regardless of the kind of the fluid since fluid delivery is not affected by the physical properties of the fluid. The delivery rate of the fluid is determined in the ranges between femtoliters/sec and milliliters/sec by the size of the microchannel and the area of the substrate being pressed by the applied external (mechanical) force. Such techniques of fluid delivery can be applied to various fields including lab-on-a-chip technology, monitoring of chemical and biological processing, portable analyzing instruments, fine chemistry, clinical diagnosis and development of new medicines.

## Description

### BACKGROUND OF THE INVENTION

### 1. Field of the Invention

The present invention relates to a method and device for accurately handling and delivering infinitesimal amounts of fluid in an elastic polymeric substrate of microfluidic devices used in chemical and biochemical analyses, syntheses and detection. The method and device deliver fluid by applying an external force on the substrate to progressively squeeze a microchannel therein along its length to deliver a desired amount of fluid through the microchannel.

### 2. Description of the Background Art

Interest about techniques for handling and delivering infinitesimal amounts of samples or reagents have been increasing, as infinitesimal analysis becomes possible due to development of science and technology. Particularly, developments in synthetic chemistry and life sciences require analyses of target materials in the development of new medicines or diagnosis. Accordingly, large amounts of expensive chemical reagents or samples are needed for analyses, and therefore efforts to minimize the costs involved in research and development have led to the need in performing infinitesimal analysis requiring only minute amounts of chemical reagents or samples.

The so-called "lab-on-a-chip" technology is receiving much attention as a means for handling infinitesimal amounts of samples or reagents are increased in research and development. A lab-on-a-chip is a "chemical microprocessor" made by integrating many kinds of devices on a substrate (or chip) having a dimension of several centimeters and made of glass, silicone or plastic using photolithography or micromachining used generally in semiconductor technology. As such, the lab-on-a-chip can be used to carry out automated experiments with a high rate, high efficiency and low cost (Kovas, *Anal. Chem.* 68 (1996) 407A-412A).

The method for delivering infinitesimal amounts of fluid in a lab-on-a-chip is completely different from conventional methods for delivering ordinary amounts of fluid since the method is used when the amount of the sample is very small and delivery of fluid is carried out through a very small microchannels.

A conventional method for delivering infinitesimal amounts of fluid in a microchannel uses electric fields. In this method, the flow of fluid can be controlled by using capillary electro-osmosis generated when a voltage is applied at the both ends of the microchannel filled with fluid without any additional pumps or valves. Chemical samples can also be separated and analyzed by using capillary electrophoresis. Therefore, it is possible to create a so-called "small chemistry lab on a chip". (Harrison, *Science* 261 (1993) 895-897; Jacobson, *Anal. Chem.* 66 (1994) 4127-4132; Li, *Anal. Chem.* 69 (1997) 1564-1568; Kopp, Science 280 (1998) 1046-1048). Devices used in this conventional method are simple and accordingly, this method is used most commonly in the fields of delivering fluids in microchannels such as in a lab-on-a-chip. However, if one or more microchannels are connected in a complicated manner, controlling the delivery of fluid therethrough is quite difficult because accurate application of electric fields is difficult. Also, accurate delivery is difficult or impossible when several kinds of solutions are delivered together since the flows of the fluids are affected by the physical properties, such as acidity (pH), ionic strength and viscosity, of the fluid to be delivered.

In addition to the above method of using electro-osmosis, much research to develop a method for accurately delivering infinitesimal amounts of fluid has been carried out. One conventional method for fluid delivery is achieved by connecting an exterior micropump to the microchannels. For this method, a peristaltic pump, injector pump or HPLC pump is used or alternatively, a method using compressed air is used (Hosokawa, *Anal. Chem.* 72(1999) 7481-4785). However, such methods are quite costly and can only be used for delivering fluids in a level of microliters and accordingly, these conventional methods are inappropriate for many fields such as lab-on-a-chip techniques, which deal with infinitesimal amounts of fluids in levels of nano- or pico-liters. These conventional methods are also difficult to carry out when fluid must be delivered at a certain rate because the fluid is delivered in a pulsating manner. Also, waste of chemical reagents or samples is increased since the fluid must be filled from the pump to the microchannels when connecting an external micropump with the lab-on-a-chip. Also, fluid can undesirably leak from the connected portion of the chip and the external micropump since the fluid must be filled into the micropump and microchannels being connected together. And accordingly, complicated and sophisticated designs and assembly of the required connection portions are necessary.

Other conventional techniques deliver fluid by directly embodying a micropump in a chip or developing a new type of pump therefor. For example, a method of using piezoelectric material having a diaphragm in the chip (Andersson, *Sens. Actuators* B72 (2001) pp.259-265; Nguyen, *Sens. Actuator A* (2001), pp.104-111), an on-chip-type diaphragm pump for delivering fluid by vibrating the diaphragm using air pressure (Scomburg, *J. Micromech. Microeng.* 3(1993) pp.216-218), a method for delivering fluid by generating air bubbles in the microchannel through a electrochemical reaction in the microchannel (Bohm, *Proceedings of the Transducers, Sendai, Japan,* 1999. pp.880-881) and the like have been reported. However, such devices are also inappropriate for accurately delivering various kinds of solutions because such conventional methods are all affected by the physical properties of the fluids.

### SUMMARY OF THE INVENTION

Therefore, the present invention provides a method for delivering various kinds of fluids at a constant rate and/or delivering fluid to a certain position in the microchannel regardless of the physical properties of the fluids to be delivered in microchannels of an elastic polymeric substrate. The substrate having microchannels formed therein does not require any additional mechanical devices or complicated structures for accurately delivering the desired fluids.

The present invention also provides an elastic polymeric substrate having a particular structure with one or more microchannels formed therein for achieving the above method.

The present invention also provides a device capable of delivering various kinds of fluids at a constant rate or to a certain position in the above elastic polymeric substrate regardless of the physical properties of the fluids.

The foregoing and other features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figures 1A to 1B show a principle of the present invention for delivering infinitesimal amounts of fluid and illustrate the fluid in a microchannel being pushed or pulled therethrough as the location being pressed by external force is moved along the microchannel.
Figure 2 shows a device which embodies a method for delivering infinitesimal amounts of fluid according to the present invention;
Figures 3A to 3B show a method for delivering fluid by increasing the substrate area where the microchannel is pressed with the external force to prevent fluid leaking from the microchannel when an excess amount of back pressure forms in the microchannel when delivering the fluid;

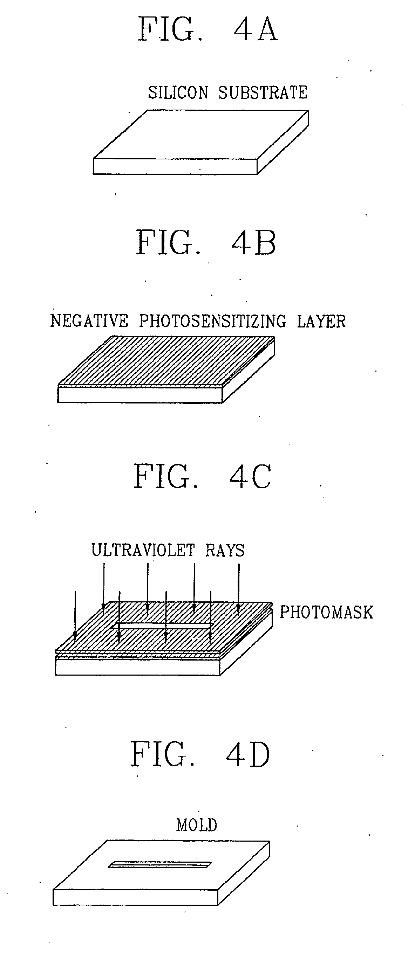

Figures 4A to 4G show a method for manufacturing a microchannel chip made of poly(dimethylsiloxane) (hereinafter referred to as "PDMS"), including the steps of (A) providing a silicone substrate, (B) spin-coating a negative photosensitizer on the substrate, (C) covering a photo mask and exposing the substrate to ultraviolet rays, (D) forming a mold by removing a portion which is not exposed using a developing solution, (E) pouring a PDMS pre-polymer into the mold and hardening in an oven, (F) removing the mold and then making a fluid inlet by making a hole in the PDMS layer and (G) attaching a new PDMS layer to form a microchannel between the two PDMS layers;
Figures 5A and 5B show the portions of a microchannel chip;

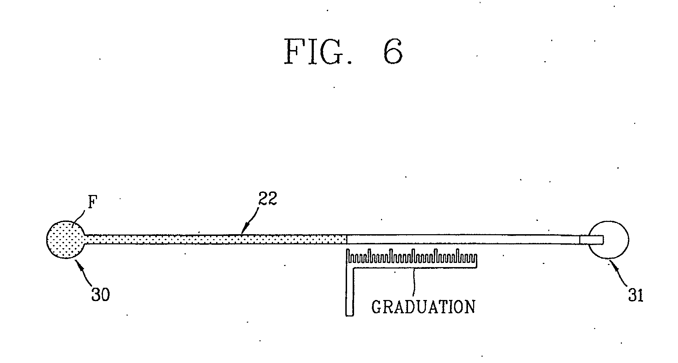

Figure 6 shows a type of the microchannel chip having graduations used in Examples 2 and 3;
Figure 7 shows the method of the experiment in Examples 2 and 3;
Figure 8 is a graph showing the relationship between the traveling rate of a miniature roller and the delivery rate of the fluid;
Figure 9 is a diagram showing the delivery rates of various kinds of fluids when the traveling rate of the miniature roller is constant;
Figure 10 is a graph showing the relationship between the traveling distance of the miniature roller and the volume of the delivered fluid;
Figure 11 shows microchannels which can be used in mixing, diluting and reacting two kinds of solutions or fluid; and
Figure 12 shows a device capable of injecting/inducting infinitesimal amounts of fluid.

### DETAILED DESCRIPTION OF THE PREFERRED EMBODIMENTS

Reference will now be made in detail to the preferred embodiments of the present invention, examples of which are illustrated in the accompanying drawings.

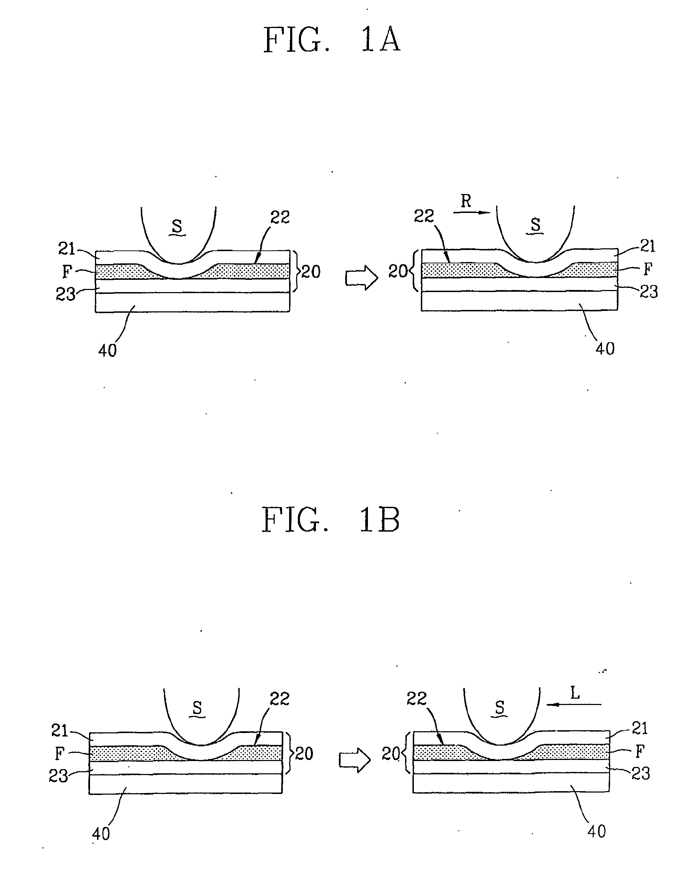

The principle of how fluid is delivered by the present invention is shown in Figure 1. Fluid F in a microchannel 22 is delivered by pushing the fluid F in a desired direction (towards the right R in Figure 1A) or by pulling the fluid F to a desired direction (towards the left L in Figure 1B) by a solid structure S applying an external (mechanical) force onto the substrate 20 to squeeze the microchannel 22 therein. The squeezed portion is moved in the horizontal direction along the microchannel 22 in the substrate 20 which made of elastic polymeric material. Here, the terms "substrate" and "chip" are used interchangeably to express various structural aspects. Using the principles of the present invention, delivery rate and/or location of infinitesimal amounts of fluid in the microchannel 22 can be accurately controlled by adjusting the traveling rate and/or distance of the portion receiving external force onto the substrate 20 to squeeze the microchannel 22 therein. Such controlling can be compared with the function of a pump in an injector. However, to employ an injector, an additional tube for connecting to the substrate and an injector is needed. On the contrary, in accordance with the present invention, the portions receiving fluid, a connection tube and a portion functioning as the pump of the injector can be integrated into a substrate 20.

Meanwhile, there are various ways to apply an external (mechanical) force on the microchannel 22 according to the present invention. The means for applying external force can be moved. Also, an identical effect can be obtained by fixing the location of the means for applying external force while the substrate 20 itself is moved.

The method of the present invention for delivering fluid can be described more in detail with reference to following Examples and embodiments but the present invention is not limited to the Examples and embodiments.

### Examples and Embodiments

### 1. A device capable of delivering fluid in a substrate

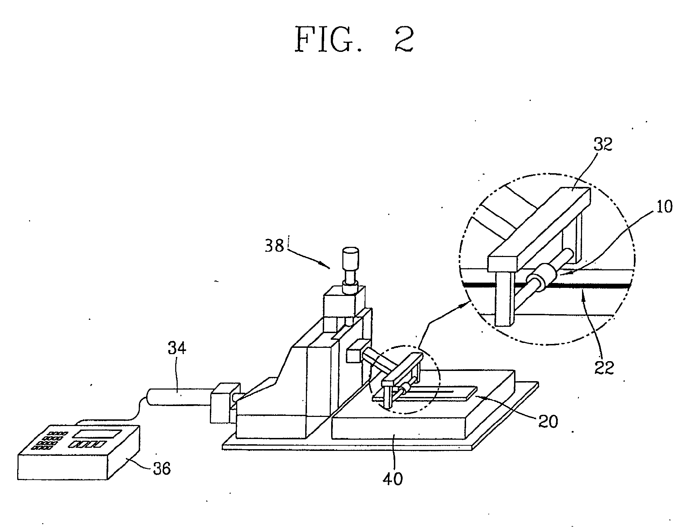

In accordance with the present invention, an example of a device for delivering fluid in the substrate 20 is shown in Figure 2. To apply external (mechanical) force on the microchannel 22 through the substrate 20, a miniature roller 10 connected to z-axis translational device 38 can be used. The roller 10 squeezes the microchannel 22 as it presses the substrate 20 from above. For accurate movement along the microchannel 22, a z-axis translational device 38 can have a miniature roller 10 fixed to a x-axis translational elements having a motorized linear actuator 34 with a minimum moving distance of less than about 1µm. In Figure 2, a roller 10 is used as a means for applying external (mechanical) force to the substrate 20 to minimize friction with the substrate 20. Various other kinds of solid structures capable of applying force or pressure to the substrate 20 can be used, and a lubricant can also be used between the contact surface of the solid structure and the substrate 20 to further reduce friction. The means capable of applying external (mechanical) force to the substrate 20 can be operated manually or can be automated by using a motor, a pump, an electromagnet or the like. When external (mechanical) force is applied, a corresponding restoring force is generated by the elasticity of the polymeric substrate 20. To overcome this restoring force in order to properly squeeze the microchannel 22 and deliver fluid therethrough, a bolt and nut combination in the z-axis translational device 38 can be used to apply force required on the substrate 20. Additionally, a spring, an air pressure piston or an electromagnet may be used to maintain the desired force being applied on the substrate 20.

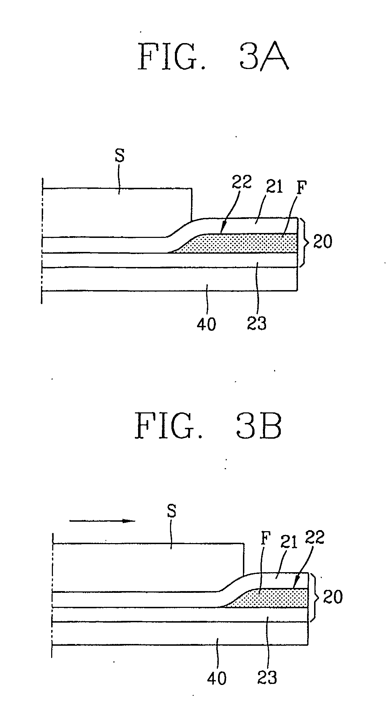

The method of pressing the microchannel 22 can be performed by applying external (mechanical) force to a small area on the substrate 20 using a cylinder or a miniature roller as shown in Figures 1 and 2. However, in this method, a quantitative delivery of fluid would be difficult since the fluid may sometimes leak out from the portion pressed on the microchannel 22 if a high back pressure within the microchannel 22 is generated when the fluid flows therethrough. Figure 3 shows a method for preventing leakage of the fluid in the microchannel 22 by widening the surface area of the substrate 20 on which the microchannel 22 is pressed with external force. It can be seen that a solid structure S contacts a larger area of the substrate 20 in Figure 3 than that when using the roller 10.

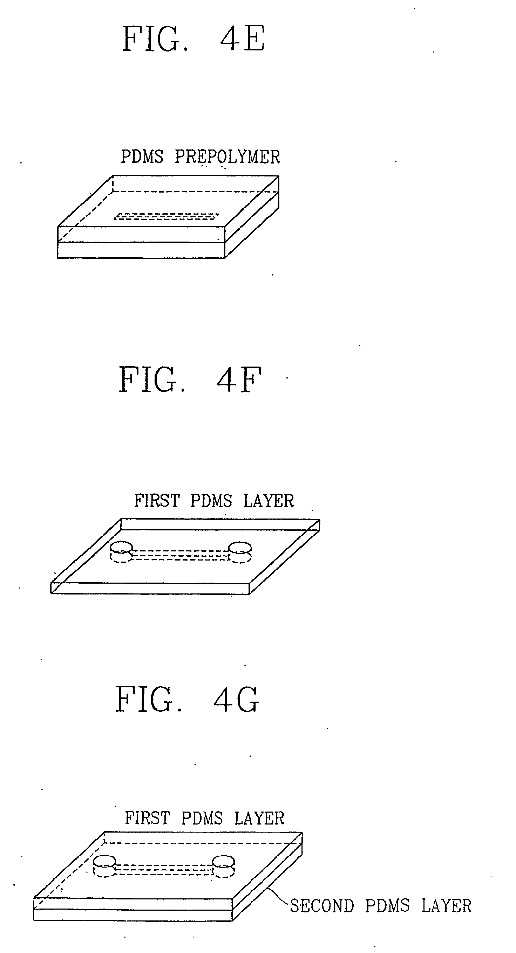

Figure 4 is an example of a method for manufacturing a microchannel chip using PDMS which is a kind of an elastic polymer. The microchannel substrate is manufactured by the following method, including the steps of making an embossing mold on a silicone substrate having embossed portions in the form of the desired microchannel to be formed by photolithography techniques used in semiconductor manufacturing processes (Figure 4A through 4D), applying a PDMS pre-polymer material (for example, Sylgard 184, Dow Corning; A:B = 10:1) for making a first PDMS layer on the embossing mold, hardening the resultant material in an oven at a temperature of about 75°C (Figure 4E), removing the embossing mold and trimming the capillary-like microchannel structure formed on a lower surface of the first PDMS layer due to the impressions left by the embossing mold so that the microchannel cross-section is rectangular, forming a hole having a diameter of about 3mm at the end portions of the microchannel (Figure 4F) to be formed and completing the formation of the capillary-like microchannel by abutting the lower surface of the first PDMS layer with a second PDMS layer (Figure 4G).

In addition to PDMS, as the material of the substrate for forming proper microchannels, any type of material can be used as long as it allows progressive squeezing the microchannel. For example, rubber, silicone type rubber or polymeric materials such as plastics, having elasticity, can be used. As methods of making a microchannel in the substrate, in addition to a method described above, pressing a flat substrate surface with an embossing mold, a hot embossing process, a manufacturing process using mechanical means, or an engraving process with light or heat energy applying laser energy or other means can be used. Since the substrate in accordance with the present invention does not in itself include a means for delivering fluid, the assembly process of positioning the structure for delivering a fluid in the substrate and the like is not necessary and accordingly, the manufacture of the substrate is easy. Also; since an identical technique for delivering fluid can be applied by using the present invention regardless of the material of the microchannel substrate, the material of the substrate can be changed without any change in the design of a fluid delivery system.

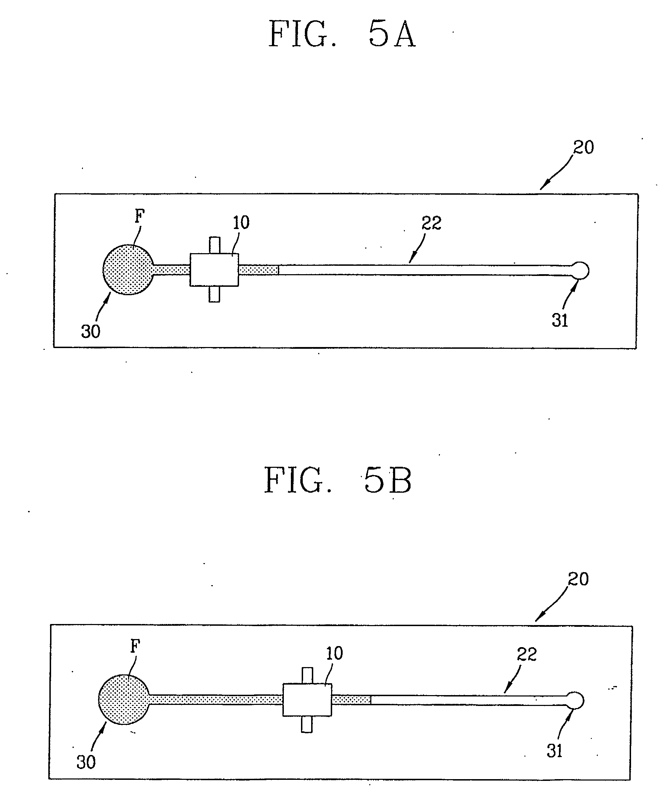

Figures 5A and 5B show the process of delivering fluid F in the microchannel 22 using a roller 10. First, the fluid injected through the fluid inlet 30 naturally enters into the microchannel 22 by capillary phenomenon or due to the difference of air pressure caused by pressure applying or reducing (Figure 5A). If the roller 10 moves along the substrate 20 in the direction of the microchannel 22 while squeezing thereon, the fluid in the microchannel is delivered in proportion to the distance that the roller 10 moves (Figure 5B). A fluid outlet 31 is also provided at the other end of the microchannel 22 to receive the delivered fluid. Various types of microchannels 22 can be used according to the volume or flow rate of the fluid to be delivered. The volume of the fluid to be delivered in the present invention can be determined by the size of the microchannel 22 and the moving distance of the miniature roller 10. For example, if the moving rate of the roller 10 is in the range of 1 µm/sec to 10mm/sec and a width and a depth of a microchannel are about µm respectively, the flow rate of the fluid can be between 1µm³/sec (=1µm x 1µm x 1µm/sec), namely, 1 femtoliter/sec and 10000µm³/sec (=1µm x 1µm x 10mm/sec), namely, 10 picoliters/sec. Also, if a microchannel having a width and depth of about 10mm is used, the flow rate of the fluid can be adjusted between 0.1 microliters/sec and 1 milliliter/sec. As described above, the total range of fluid flow rate can be controlled by adjusting the width and depth of the microchannel, and the fluid flow rate within the determined range can be controlled by adjusting the moving rate of the roller.

### 2. A device for delivering fluid in a single microchannel substrate

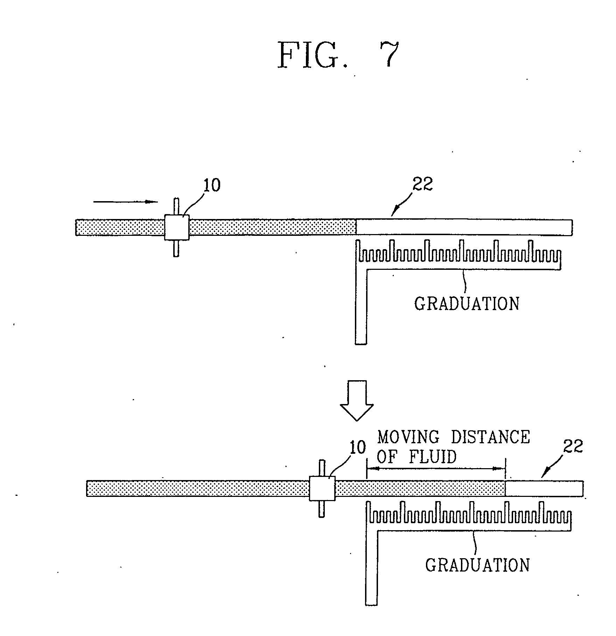

A device for delivering fluid can be made as described in Example 1 and Figure 2 using a single microchannel substrate and a process employing such device in an experiment will be described as follows. A single microchannel substrate 20 having a microchannel 22 in the form of a straight line having a width, depth and length of about 50µm, 30µm and 4cm, respectively, is placed and fixed on the substrate support 40 shown in Figure 2. The single microchannel substrate 20 can have graduations for measuring the moving distance of the fluid formed adjacent to the microchannel 22 on the substrate 20. The boundary between the fluid and air in the microchannel 22 can be visually detected with the graduations using a monitor connected with a charge coupled device (hereinafter referred to as "CCD") camera. In this example, the microchannel 22 in the substrate 20 was filled with red water-soluble ink through the fluid inlet of the substrate 20. The miniature roller 10 was then positioned above the microchannel 22 of the substrate 20 using the manual z-axis translational device 38, and moved along the substrate 20 in the direction of the fluid outlet using the linear moving device 34 connected with x-axis translational element so that the microchannel 22 is squeezed along its length. Thereafter, the miniature roller 10 was raised from the substrate 20 using the z-axis translational device 38 after fluid delivery and returned to its original position using the linear moving device 34 connected with the x-axis translational element. The process was repeated three or four times to move the red ink by the graduations of the microchannel substrate 20. Then, as shown in Figure 7, the time required for the fluid to pass between two graduations being a certain distance apart from one another was measured by moving the miniature roller 10 at various rates.

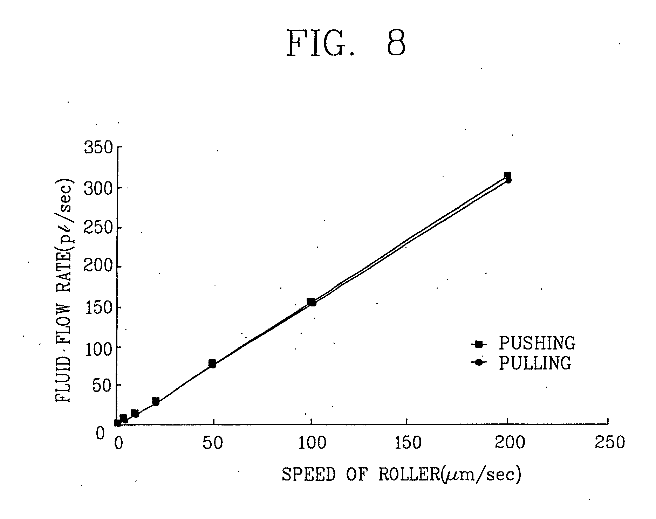

Figure 8 shows the delivery rates of the red ink when the miniature roller 10 was moved along the substrate 20 at various rates. It shows that the delivery rate of the fluid is exactly proportional to the moving rate of the miniature roller 10. The flow rate of the fluid is related to the volume of the inner portion of the microchannel 22 where the roller 10 applies external (mechanical) force whereby, and the widths or depths of a microchannel need not be the same as shown in Figure 5.

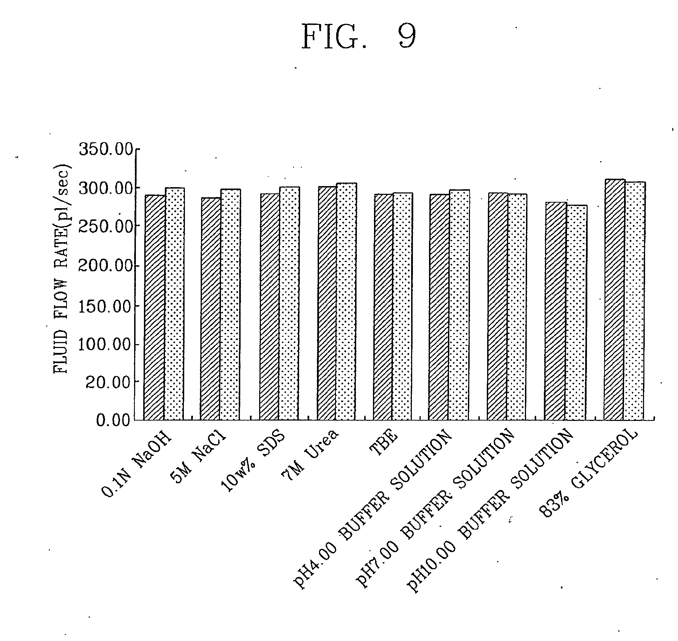

In most devices commonly used to deliver infinitesimal amounts of fluid, the various conditions of how the solution should be delivered must be changed according to the physical properties of the fluid to thereby accurately adjust the delivery rate of various kinds of fluids. For example, when fluid is delivered by electro-osmosis, various delivery conditions must be considered because the flow rate of electro-osmosis is changed according to the compositions of fluid. However, using the present invention, fluids can be delivered regardless of the physical properties of the fluid since the fluid is pushed or pulled through the microchannel by applying an external (mechanical) force thereon. Further, the delivery rate is determined by the moving rate of the external (mechanical) force being applied on the microchannel. Accordingly, the desired delivery rate can be obtained even if the kind of fluid changes. Figure 9 shows the results of the delivery of various kinds of fluids with a microchannel substrate having a width of about 50µm, a depth of about 30µm and by setting the rate of the miniature roller at about 200µm /sec. Figure 9 shows that the flow rate of fluid is the same if the moving rate of the miniature roller 10 is the same, regardless of the kind of the fluid when using the device of the present invention.

### 3. A method for moving a solution to a certain position in the substrate

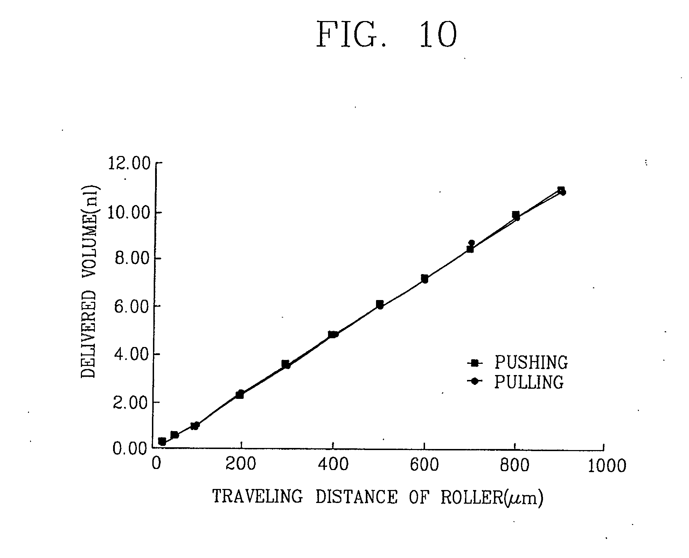

With the present invention, in addition to delivering fluid at a certain rate, accurately delivering the fluid to a certain position in the substrate is possible. Namely, the position of the fluid can be accurately adjusted in the substrate. The experimental process is similar to that of Example 2 whereby the only difference is that the distance where the boundary between the fluid and the air in the microchannel moves is measured by graduations after moving the miniature roller 10 by a certain distance. Figure 10 shows the volume of the delivered fluid according to the delivery distance of the miniature roller 10 and shows that the volume of the fluid to be delivered can be adjusted by the moving distance of the miniature roller 10.

By such principle, the volume of the fluid can be measured. Because the size of the cross-section of the microchannel 22, namely, the width and the depth of the microchannel 22 are known when the microchannel 22 is formed, the volume of the fluid passing therethrough can be calculated by measuring the length of the microchannel 22 filled with the fluid. When both end portions of the fluid to be measured is separated by gases (including air), solutions or oils in which the fluid is not dissolved, the volume of the fluid can also be calculated by measuring the delivery distance of the fluid in the microchannel 22 from the front to rear ends of the microchannel 22 (namely, the moving distance of a miniature roller 10) with an imaging instrument such as a CCD camera, or by observing the changes of the intensity of radiation caused by light-scattering at the front and rear ends of the fluid in the microchannel 22 with a light-receiving device after radiating light on a fixed portion in the microchannel 22 with a light-emitting device.

### 4. A method for delivering fluid in a microchannel substrate

A plurality of microchannels can be manufactured in a substrate since the microchannel substrate preferably has a flat surface. A substrate having a plurality of microchannels can be used in various fields of applications, such as in mixing of different solutions, dilution of solutions through mixing, process for chemical and/or binding reactions, dividing a solution into certain volumes, adjusting the delivery direction of the fluid, extraction of a certain substance existing in a solution, and/or separation, purification, concentration and/or titration of chemical compounds.

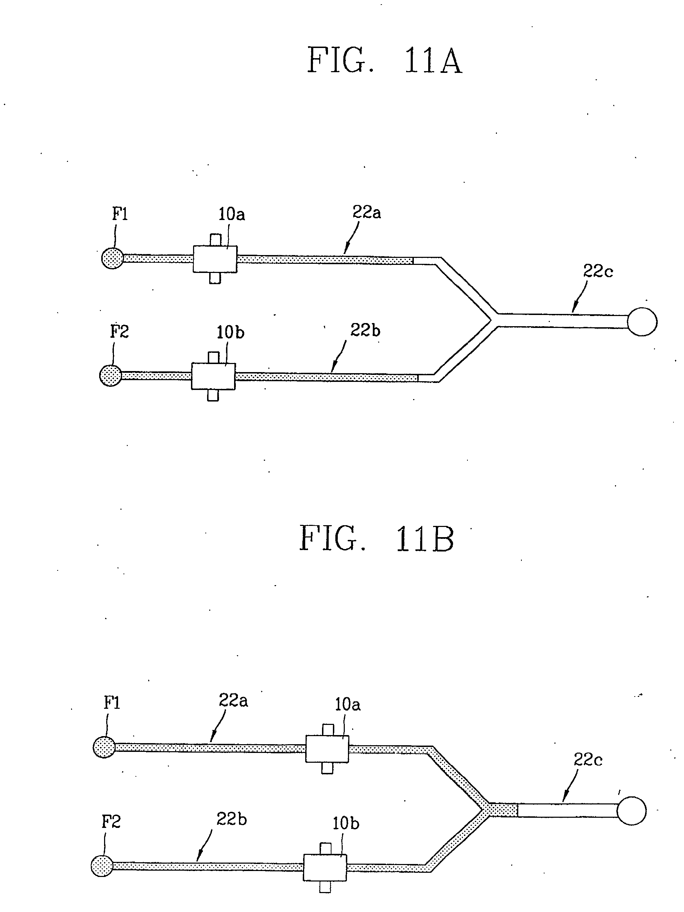

Figure 11 is a view showing a method for mixing two kinds of fluids or solutions F1 and F2 in accordance with the present invention. The two microchannels 22a and 22b on the substrate are designed to be joined together at an end portion 22c. As shown in Figure 11A, when the fluids are delivered through the respective microchannels 22a and 22b after supplying the fluids F1 and F2 through one end of each microchannel 22a and 22b, the fluids F1 and F2 are mixed at the portion 22c where the microchannels 22a and 22b are joined together (Figure 11B). In Figure 11A and 11B, two rollers 10a and 10b are used but the fluids or solutions can be delivered in two or more microchannels 22a and 22b simultaneously with one roller applying external force on both microchannels 22a and 22b at the same time. The fluid mixing ratio can be adjusted by varying the rate of delivering the fluids F1 and F2, varying the ratio of the cross-sectional area (i.e. width x depth) of the microchannels 22a and 22b where the fluids F1 and F2 pass or using both of the above two methods. If fluid F2 is a solvent for fluid F1, fluid F1 can be diluted, and the combined fluid in the microchannel 22c becomes a dilution of fluid F1. If reactive materials are included in the two solutions F1 and F2, a reaction can be carried out by mixing in the microchannel 22c. Examples of possible reactions include any kind of reaction which can occur in a solution, such as chemical reactions, biochemical reactions between enzymes and the substrates, and binding reactions between a receptor and a ligand, just to name a few.

In the examples of the present invention, the delivery of two kinds of solutions or fluids are mentioned, but the present invention is not limited to such examples as the delivery of two or more solutions can be possible according to the structure of the microchannels. Also, in one substrate, the above described delivery is not performed singly but one fluid delivery step can be performed after another fluid delivery step in order or in parallel by using a substrate with a plurality of microchannels and/or fluid delivery portions in the microchannels formed in the substrate.

To perform reactions in the substrate, various kinds of fluids or solutions must typically be handled in the substrate. If the reactivity of fluids or solutions which are used in reactions is high, problems of damage to the device and contamination of the fluids or solutions can occur while delivering such solutions. However, the device in accordance with the present invention does not incur damage to the device or result in fluid or solution contamination since the means for delivering fluids or solutions (e.g., a roller progressively squeezing the microchannel) are not in direct contact with the fluids or solutions in the microchannel. The method and device of the present invention can also deliver solutions of equal volume regardless of the differences in physical properties of the solutions or fluids. And accordingly, the method in accordance with the present invention can be used as an efficient fluid or solution delivering means in the lab-on-a-chip technology requiring the processes of reacting infinitesimal amounts of chemical and/or biological samples.

The principle of delivering fluid in accordance with the present invention can be substantially applied to all fields where the lab-on-a-chip technology for handling and/or treating infinitesimal amounts of solutions can be applied. Generally, the present invention can be applied in its entirety or portions thereof to handle and/or deliver fluids to devices for researching new medicines, compound synthesizers, biochemical analyzers, pre-treatment of samples, instruments for detecting molecules, environmental pollution analyzers, detectors or discriminators for chemical or biochemical weapons, monitoring instruments for chemical or biological processing, medical diagnosing instruments, health examining instruments, cultivators of cells and microbes, and devices for transmitting medicines, just to name a few.

### 5. A device for injecting/inducting of infinitesimal amounts of solutions

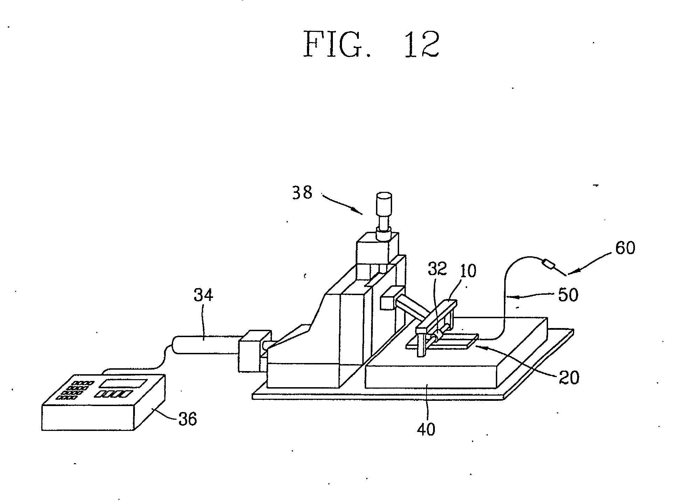

Technology capable of controlling the delivery of infinitesimal amounts of fluids or solutions is needed in various fields in addition to the field of the lab-on-a-chip. Figure 12 shows a device capable of injecting/inducting infinitesimal amounts of fluids or solutions in accordance with the present invention. A capillary 50 is connected to an end of the microchannel 22 and the other end of the capillary 50 has the form of a pipette tip 60 having a tapered structure. The pipette tip 60 structure can be made by "pulling" the capillary. The inner diameter of the capillary 50 can be made to be in the range of, for example, 1µm to 1mm according to desired applications. The inner diameter of the pipette tip structure 60 can be made to be in the range of, for example, 10nm to 100µm. After inserting the tip 60 into a chemical sample, infinitesimal amounts of fluids or solutions in the level of picoliters or nanoliters can be accurately injected or inducted using the present invention. Possible samples includes, for example, globular fluids, vesicles or cells having a diameter of several micrometers or nanometers, and the present invention can be used to perform reactions by injecting desired fluids or solutions, or to perform sampling by inducting the fluid or solution in the samples. Also, the present invention can be used to deliver a certain amount of fluid or solution onto the surface of a solid or into another solution which does not mix well with the solution being delivered. The present invention has an advantage in that it can deliver a desired volume of fluid or solution, because the volume of fluid or solution is accurately determined by the moving distance of the external force applying device (e.g., a roller), and by the dimensions of the microchannel itself.

In accordance with the present invention, a method and device for handling by quantitatively delivering fluid or solution in from minute to infinitesimal amounts such as femtoliters up to milliliters is achieved.

The present invention can be applied to many fields which require handling and/or delivering infinitesimal amounts of fluids or solutions, such as in the fields of searching for new medicines, chemical and biochemical studies, researching in life sciences, medical diagnosing instruments, rapid health examining instruments for home and hospital use, monitoring instruments for chemical or biological processing, portable analyzing instruments for environmental pollutants, and analyzing instruments for detecting or discriminating chemical, biological and radiological weapons, just to name a few.

Also, as lab-on-a-chip technology is expected to be rapidly developed in the near further, the present invention can be applied to a wide variety of fields where the lab-on-a-chip can be applied since the present invention provides a method and device achieving excellent performance in handling and/or delivering fluids yet requiring only a simple structure compared to conventional devices.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method of causing a fluid to travel within an elastic microchannel by temporarily and progressively deforming the microchannel along its length by applying an external force to urge the fluid therein to travel therethrough.

2. The method of claim 1, which comprises delivering the fluid in one or several directions, dividing the fluid into a predetermined volume, and/or delivering the fluid in order to carry out at least one process of a mixing, dilution, reaction, extraction, purification, separation and titration.

3. A method of handling a fluid comprising:
providing an elastic substrate comprising at least one elastic microchannel formed therein which are independent or connected with each other;
transferring a fluid through the microchannel by progressively squeezing the microchannel along its length; and
using the transferred fluid for chemical or biological processing.

4. The method of claim 3, wherein the chemical or biological processing is carried out on the substrate having portions therein for performing at least one process of reaction, synthesis, separation and analysis of chemical compounds or mixtures, wherein each portion of the substrate is used to perform more than one process in order or in parallel.

5. The method of claim 3 or 4, wherein the chemical or biological processing comprises separation, analysis or synthesis of a chemical compound or mixture by carrying out at least one process of reaction, separation, mixing, extraction, purification, concentration and titration.

6. A microfluidic device for handling a fluid, the device comprising:
a substrate having at least one elastic microchannel formed therein which are independent or connected with each other;
a transfer element in operative contact with the substrate to transfer a fluid through the microchannel by progressively squeezing the microchannel along its length; and
a processing element operatively connected with the microchannel to use the fluid transferred by the transfer element for chemical or biological processing.

7. The device of claim 6, wherein the transfer element is a roller which continuously contacts with the substrate to progressively squeeze the microchannel along its length until the fluid is delivered in a desired amount or distance.

8. The device of claim 6 or 7, wherein the transfer element further comprises a longitudinal movement device operatively connected with the roller for moving the roller along the substrate in a longitudinal direction of the microchannel while simultaneously pressing the microchannel.

9. The device of at least one of claims 6 to 8, wherein the processing element is a reaction portion formed within the substrate and connected with at least one microchannel to allow separation, analysis or synthesis of chemical compounds or mixtures by carrying out at least one process of reaction, separation, mixing, extraction, purification, concentration and titration.

10. The device of at least one of claims 6 to 9, which is a component of a lab-on-a-chip system, a chemical compound analyzer, a chemical compound synthesizer or a medical instrument.
